# EUROPÄISCHE PATENTSCHRIFT

(11) **EP 3 943 763 B1**
(45) Veröffentlichungstag und Bekanntmachung des Hinweises auf die Patenterteilung: **14.02.2024**
(21) Anmeldenummer: 21186721.3
(22) Anmeldetag: 20.07.2021
(51) Int. Cl.: F16B 25/00, F16B 25/10, F16B 35/06, F16B 33/02

(54) **HOLZ- ODER KUNSTSTOFFSCHRAUBE**
WOOD OR PLASTIC SCREW
VIS À BOIS OU À MATIÈRE PLASTIQUE

(30) Priorität: 24.07.2020 DE 102020119633
(43) Veröffentlichungstag der Anmeldung: 26.01.2022
(73) Patentinhaber: Berner Omnichannel Trading Holding SE, 74653 Künzelsau (DE)
(72) Erfinder: Lienau, Thorsten, 74653 Ingelfingen (DE); Schlipf, Michael, 74653 Ingelfingen (DE)
(74) Vertreter: Prinz & Partner mbB

(56) Entgegenhaltungen:
- CN-Y- 2 474 781
- CN-Y- 2 766 087
- JP-A- 2006 097 719
- TW-A- 201 901 047
- TW-U- M 547 607
- US-A1- 2007 065 255
- US-A1- 2008 286 072

## Beschreibung

Die Erfindung betrifft eine Holz- oder Kunststoffschraube mit einem Zusatzgewinde.

Holz- oder Kunststoffschrauben, die neben einem Hauptgewinde zusätzliche Schneidgeometrien oder Rippen im Bereich des Hauptgewindes aufweisen, sind bereits bekannt.

Derartige Geometrien dienen dazu, ein einfacheres Eindrehen der Schraube zu ermöglichen.

Die US 2008 / 286 072 A1 offenbart eine selbstschneidende Holzschraube mit einem zweigängigen Hauptgewinde, wobei die Holzschraube ein Zusatzgewinde im kegeligen Spitzenabschnitt aufweist.

Zudem ist aus der TW 201 901 047 A eine Holzschraube mit einem eingängigen Hauptgewinde und zusätzlichen Schneidrippen bekannt, die im kegeligen Spitzenabschnitt angeordnet sind.

Die bekannten Schrauben weisen jedoch Verbesserungsbedarf hinsichtlich des Eindrehverhaltens und/oder hinsichtlich der Herstellbarkeit auf.

Es ist daher eine Aufgabe der vorliegenden Erfindung, eine Holz- oder Kunststoffschraube bereitzustellen, die sich durch ein gutes Eindrehverhalten in ein Werkstück und eine einfache Herstellbarkeit auszeichnet.

Diese Aufgabe wird erfindungsgemäß gelöst durch eine Holz- oder Kunststoffschraube gemäß Anspruch 1, mit einem Kopf, einer Spitze, einem zylindrischen Schaftabschnitt, einem kegeligen Spitzenabschnitt, der den Übergang vom Schaftabschnitt zu der Spitze bildet, und mit einem Hauptgewinde, das sich über den Schaftabschnitt bis zur Spitze erstreckt, sowie mit einem Zusatzgewinde, das sich abschnittsweise im Bereich des kegeligen Spitzenabschnitts von einem Gewindegang des Hauptgewindes zum nächsten Gewindegang erstreckt und an entgegengesetzten Enden in das Hauptgewinde übergeht, ohne sich mit einem Gewindegang zu überkreuzen, wobei sich das Zusatzgewinde sich von der Spitze aus betrachtet zwischen dem zweiten und den dritten Gewindegang erstreckt. Dies ist vorteilhaft hinsichtlich der Höhe des Zusatzgewindes beziehungsweise hinsichtlich des Durchmessers des durch das Zusatzgewinde ausgeschabten Kernlochs. Im Bereich des ersten Gewindegangs hat die Schraube einen relativ geringen Durchmesser, was dazu führen würde, dass ein Zusatzgewinde im Bereich des ersten Gewindegangs von der Spitze aus betrachtet ein Kernloch mit einem relativ geringen Durchmesser schaben würde. Dies wäre hinsichtlich des Eindrehverhaltens der Schraube nicht optimal. Ferner kann aufgrund des Abstands zur Spitze das Hauptgewinde schnell ins Werkstück eingreifen und die Schraube darin sichern, bevor das Zusatzgewinde schabt. Im Bereich zwischen dem zweiten und dem dritten Gewindegang hat die Schraube bereits einen ausreichend großen Durchmesser, sodass ein in diesem Bereich angeordnetes Zusatzgewinde ein Kernloch schaben kann, durch welches das Eindrehverhalten der Schraube deutlich verbessert ist.

Ferner wird die Aufgabe gelöst durch eine Holz- oder Kunststoffschraube gemäß Anspruch 3, mit einem Kopf, einer Spitze, einem zylindrischen Schaftabschnitt, einem kegeligen Spitzenabschnitt, der den Übergang vom Schaftabschnitt zu der Spitze bildet, und mit einem Hauptgewinde, das sich über den Schaftabschnitt bis zur Spitze erstreckt, sowie mit einem Zusatzgewinde, das sich abschnittsweise im Bereich des kegeligen Spitzenabschnitts von einem Gewindegang des Hauptgewindes zum nächsten Gewindegang erstreckt und an entgegengesetzten Enden in das Hauptgewinde übergeht, ohne sich mit einem Gewindegang zu überkreuzen, wobei sich das Zusatzgewinde in Längsrichtung der Schraube über maximal 1/3 der Länge des kegeligen Spitzenabschnitts erstreckt, insbesondere über weniger als 1/3 der Länge des kegeligen Spitzenabschnitts.

Unter einem Zusatzgewinde versteht man einen Gewindeabschnitt, der sich nur abschnittsweise entlang der Schraube erstreckt und sich auf das Eindrehverhalten der Schraube auswirkt.

Das Zusatzgewinde der erfindungsgemäßen Holz- oder Kunststoffschraube dient als Schabeabschnitt und verbessert das Eindrehverhalten der Holz- oder Kunststoffschraube. Insbesondere sorgt das Zusatzgewinde für einen reduzierten Widerstand beim Eindrehen der Holz- oder Kunststoffschraube, indem das Zusatzgewinde beim Eindrehen der Schraube einen Teil des Materials des Werkstücks wegschabt und abtransportiert. Anders ausgedrückt wird beim Eindrehen der Schraube durch das Zusatzgewinde sukzessiv ein Kernloch ausgeschabt.

Dadurch, dass sich das Zusatzgewinde abschnittsweise im Bereich des kegeligen Spitzenabschnitts von einem Gewindegang des Hauptgewindes zum nächsten Gewindegang erstreckt, ohne sich mit einem Gewindegang zu überkreuzen, ist eine Art großvolumige Tasche gebildet, von der beim Eindrehen der Schraube abgeschabtes Material mitgenommen wird. Darüber hinaus wird durch eine derartige Anordnung des Zusatzgewindes erreicht, dass beim Eindrehen der Schraube ein Kernloch sukzessiv geschabt wird, ohne dass gleichzeitig der Widerstand beim Eindrehen durch das Zusatzgewinde übermäßig ansteigt. Anders ausgedrückt wird der Vorteil, der durch das Ausschaben des Kernlochs erreicht wird, nicht durch einen stark erhöhten Widerstand aufgrund des Zusatzgewindes aufgehoben. Mit zunehmender axialer Länge des Zusatzgewindes nimmt nämlich der Widerstand zu, der durch das Zusatzgewinde selbst beim Eindrehen der Schraube verursacht wird. Da das Zusatzgewinde ein Gewinde ist, steht es in Seitenansicht schräg zur Mittelachse der Schraube.

Das Hauptgewinde erstreckt sich ausgehend von einem Ende des Zusatzgewindes weiter fort, und zwar sowohl in Richtung des Kopfes als auch in Richtung der Spitze. Das bedeutet, dass das Zusatzgewinde und das Hauptgewinde im Bereich eines Endes des Zusatzgewindes ein T bilden.

Gemäß einer bevorzugten Ausführungsform hat die Holz- oder Kunststoffschraube lediglich ein einziges Zusatzgewinde.

Die Holz- oder Kunststoffschraube ist vorzugsweise selbstschneidend.

Vorzugsweise hat das Zusatzgewinde eine zum Hauptgewinde entgegengesetzte Steigung, wobei die Steigung des Zusatzgewindes insbesondere größer ist als die Steigung des Hauptgewindes.

Indem das Zusatzgewinde eine zum Hauptgewinde entgegengesetzte Steigung hat, wird sichergestellt, dass das Zusatzgewinde beim Eindrehen der Schraube tatsächlich schabt und nicht etwa schneidet. So kann ein ausreichender Materialabtrag im Werkstück erreicht werden. Indem die Steigung des Zusatzgewindes größer ist als die Steigung des Hauptgewindes, verläuft das Zusatzgewinde in einem Winkel, der für die Schabefunktion vorteilhaft ist.

Gemäß einer Ausführungsform erstreckt sich das Zusatzgewinde ausschließlich im Bereich des kegeligen Spitzenabschnitts. Dadurch wird erreicht, dass das Zusatzgewinde gegenüber dem Kerndurchmesser der Schraube nicht vorsteht. Somit beeinflusst das Zusatzgewinde nicht die Stabilität der Verbindung der Schraube mit einem Werkstück. Genauer gesagt wird vermieden, dass das durch das Zusatzgewinde ausgeschabte Kernloch einen Durchmesser hat, der größer ist als der Kerndurchmesser der Holz- oder Kunststoffschraube.

Beispielsweise erstreckt sich das Zusatzgewinde ausgehend vom Schaftabschnitt in den kegeligen Spitzenabschnitt hinein. Damit ist gemeint, dass das Zusatzgewinde genau am Übergang vom Schaftabschnitt zum kegeligen Spitzenabschnitt beginnt und sich zur Schraubenspitze hin erstreckt. Dadurch wird ebenfalls erreicht, dass das Zusatzgewinde gegenüber dem Kerndurchmesser des Schaftabschnitts nicht vorsteht.

Alternativ beginnt das Zusatzgewinde in axialer Richtung vom Kopf ausgehend betrachtet mit einem Abstand zum Schaftabschnitt. Dadurch kann das Zusatzgewinde über seine gesamte Länge eine gewisse Mindesthöhe haben, ohne über den Kerndurchmesser des Schaftabschnitts hinauszustehen. Beginnt das Zusatzgewinde hingegen genau am Übergang vom Schaftabschnitt zum Spitzenabschnitt, kann die Höhe des Zusatzgewindes zur Spitze hin ansteigend sein.

Die Höhe des Zusatzgewindes ist die Ausdehnung des Zusatzgewindes in radialer Richtung.

Gemäß einer Ausführungsform erstreckt sich das Zusatzgewinde umfangsmäßig über maximal 179°, vorzugsweise über maximal 165° des Umfangs der Schraube. Dies ist vorteilhaft hinsichtlich der Herstellbarkeit der Schraube.

Die Steigung des Zusatzgewindes beträgt gemäß einer Ausführungsform mehr als 20°, insbesondere mehr als 25°, vorzugsweise 26°. Dadurch bietet das Zusatzgewinde beim Eindrehen ausreichend Angriffsfläche, um das Material des Werkstücks effektiv zu verdrängen und auszuschaben.

Das Hauptgewinde kann eingängig sein. Eine Schraube mit einem eingängigen Hauptgewinde lässt sich besonders einfach herstellen.

Zwischen dem Hauptgewinde und dem Kopf der Schraube ist vorzugsweise ein Schabeabschnitt mit schräg verlaufenden Schaberippen am Schaftabschnitt vorgesehen. Der Schabeabschnitt sorgt ebenfalls für eine Reduzierung des Einschraubwiderstands.

Der Schaftabschnitt kann axial zwischen dem Bereich mit Schaberippen und dem Bereich mit dem Hauptgewinde einen sich konisch zum Kopf aufweitenden Übergangsabschnitt haben. Der Übergansabschnitt dient als Einführhilfe für den Schabeabschnitt.

Der Kopf kann auf seiner der Spitze zugewandten Unterseite konisch sein und in diesem Bereich Nuten mit angrenzenden Schneidkanten haben. Dadurch kann der Kopf beim Eindrehen der Schraube in dem Werkstück versenkt werden, ohne dass das Eindrehverhalten dabei negativ beeinflusst wird. Durch die Schneidkanten wird insbesondere beim Eindrehen der Schraube eine konische Vertiefung in das Werkstück geschnitten, in welcher der Kopf versenkt wird.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 eine erfindungsgemäße Schraube in einer Seitenansicht, und
- Figur 2 eine weitere erfindungsgemäße Schaube in einer Seitenansicht.

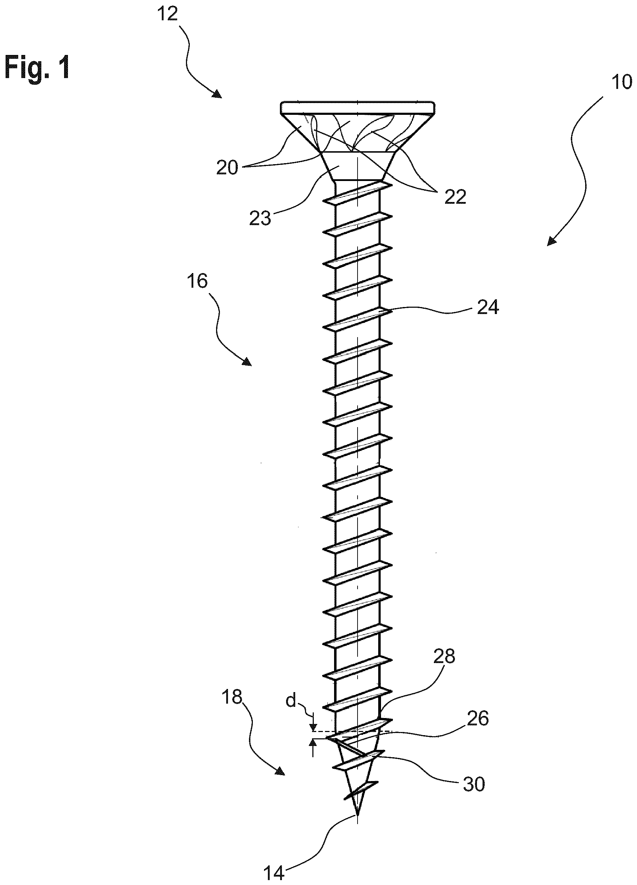

Figur 1 zeigt eine Schraube 10 in einer Seitenansicht. Bei der Schraube 10 handelt es sich um eine Holz- oder eine Kunststoffschraube, genauer gesagt um eine selbstschneidende Schraube.

Die Schraube 10 weist mehrere Abschnitte auf, und zwar einen Kopf 12, eine Spitze 14, einen zylindrischen Schaftabschnitt 16 und einen kegeligen Spitzenabschnitt 18, der den Übergang vom Schaftabschnitt 16 zur Spitze 14 bildet. Der Übergang vom Schaftabschnitt 16 zum kegeligen Spitzenabschnitt 18 ist in Figur 1 durch eine gestrichelte Linie gekennzeichnet.

Der Kopf 12 ist auf seiner der Spitze 14 zugewandten Unterseite konisch und hat in diesem Bereich Nuten 20 mit angrenzenden Schneidkanten 22.

Zwischen dem Kopf 12 und dem Schaftabschnitt 16 kann ein zusätzlicher konischer Abschnitt 23 vorgesehen sein, der insbesondere einen kleineren Konuswinkel hat als der Kopf 12.

Über den zylindrischen Schaftabschnitt 16 bis hin zur Spitze 14 erstreckt sich ein Hauptgewinde 24. Bei dem in Figur 1 dargestellten Hauptgewinde 24 handelt es sich um ein eingängiges Gewinde. Es ist jedoch auch denkbar, dass das Hauptgewinde 24 zweigängig ist.

Im Falle eines zweigängigen Gewindes erstreckt sich ein erster Gewindegang des zweigängigen Hauptgewindes 24 bis zur Spitze 14 und ein zweiter Gewindegang des zweigängigen Hauptgewindes 24 endet in einem Abstand zur Spitze 14.

Zusätzlich zum Hauptgewinde 24 umfasst die Schraube 10 ein Zusatzgewinde 26.

Das Zusatzgewinde 26 erstreckt sich zumindest abschnittsweise im Bereich des kegeligen Spitzenabschnitts 18. Genauer gesagt erstreckt sich das Zusatzgewinde 26 ausschließlich im Bereich des kegeligen Spitzenabschnitts 18.

Im dargestellten Ausführungsbeispiel beginnt das Zusatzgewinde 26 in axialer Richtung betrachtet mit einem Abstand d zum Schaftabschnitt 16.

Es ist jedoch auch denkbar, dass sich das Zusatzgewinde 26 ausgehend vom Schaftabschnitt 16 in den kegeligen Spitzenabschnitt 18 hineinerstreckt, das heißt, dass das Zusatzgewinde 26 genau am Übergang vom zylindrischen Schaftabschnitt 16 zum kegeligen Spitzenabschnitt 18 beginnt.

Das Zusatzgewinde 26 hat eine zum Hauptgewinde 24 entgegengesetzte Steigung. Die Steigung des Zusatzgewindes 26 ist dabei größer als die Steigung des Hauptgewindes 24. Beispielsweise beträgt die Steigung des Zusatzgewindes 26 mehr als 20°, insbesondere mehr als 25°, vorzugsweise 26°, während die Steigung des Hauptgewindes 24 bis zu 20° beträgt.

Zudem erstreckt sich das Zusatzgewinde 26 umfangsmäßig über maximal 179°, vorzugsweise über maximal 165° des Umfangs der Schraube 10. In der in Figur 1 dargestellten Seitenansicht ist insbesondere das gesamte Zusatzgewinde 26 zu sehen.

Das Zusatzgewinde 26 erstreckt sich, wie in Figur 1 zu sehen ist, von einem Gewindegang 28 des Hauptgewindes 24 zum nächsten Gewindegang 30, ohne sich mit einem Gewindegang 28, 30 zu überkreuzen.

Im dargestellten Ausführungsbeispiel erstreckt sich das Zusatzgewinde 26 von der Spitze 14 aus betrachtet zwischen dem zweiten und den dritten Gewindegang des Hauptgewindes 24. Die genaue Position kann jedoch, insbesondere in Abhängigkeit von der axialen Länge des kegeligen Spitzenabschnitts 18, variieren.

Dabei erstreckt sich das Zusatzgewinde 26 in Längsrichtung der Schraube 10 über maximal 1/3 der Länge des kegeligen Spitzenabschnitts 18, insbesondere über weniger als 1/3 der Länge des kegeligen Spitzenabschnitts 18.

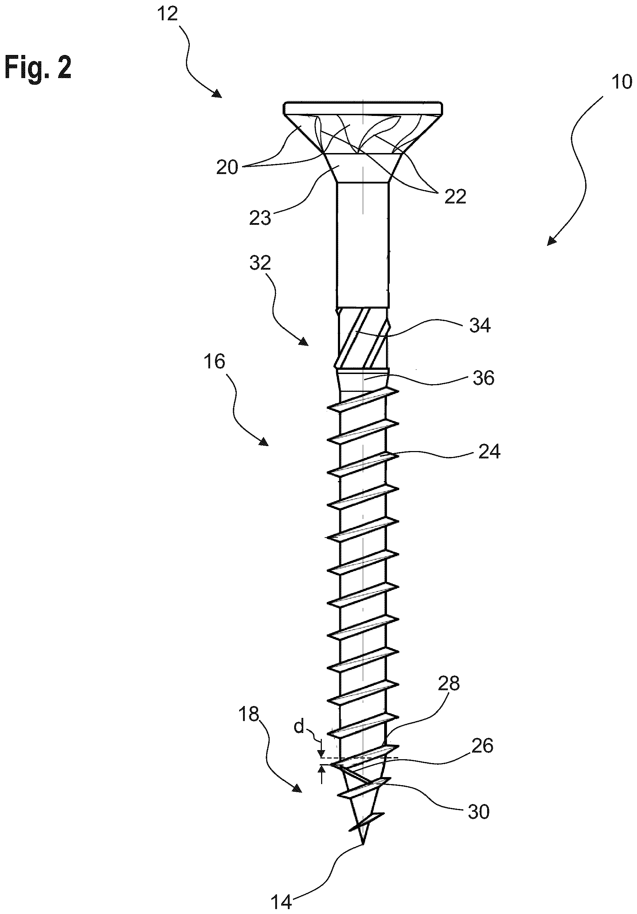

Figur 2 zeigt eine weitere Schraube 10, die sich von der in Figur 1 dargestellten Schraube dadurch unterscheidet, dass zwischen dem Hauptgewinde 24 und dem Kopf 12 ein Schabeabschnitt 32 am Schaftabschnitt 16 vorgesehen ist, wobei der Schabeabschnitt 32 schräg verlaufenden Schaberippen 34 hat.

Die Schaberippen 34 weisen eine größere Steigung auf als das Hauptgewinde 24.

Axial zwischen dem Schabeabschnitt 32 und dem Bereich mit dem Hauptgewinde 24 hat der Schaftabschnitt 16 einen sich konisch zum Kopf 12 aufweitenden Übergangsabschnitt 36.

## Patentansprüche

1. Holz- oder Kunststoffschraube (10), mit einem Kopf (12), einer Spitze (14), einem zylindrischen Schaftabschnitt (16), einem kegeligen Spitzenabschnitt (18), der den Übergang vom Schaftabschnitt (16) zu der Spitze (14) bildet, und mit einem Hauptgewinde (24), das sich über den Schaftabschnitt (16) bis zur Spitze (14) erstreckt, sowie mit einem Zusatzgewinde (26), das sich abschnittsweise im Bereich des kegeligen Spitzenabschnitts (18) von einem Gewindegang (28) des Hauptgewindes (24) zum nächsten Gewindegang (30) erstreckt und an entgegengesetzten Enden in das Hauptgewinde (24) übergeht, ohne sich mit einem Gewindegang (28, 30) zu überkreuzen, **dadurch gekennzeichnet, dass** sich das Zusatzgewinde (26) von der Spitze (14) aus betrachtet zwischen dem zweiten und den dritten Gewindegang erstreckt.

2. Holz- oder Kunststoffschraube (10) nach Anspruch 1, **dadurch gekennzeichnet, dass** sich das Zusatzgewinde (26) in Längsrichtung der Schraube (10) über maximal 1/3 der Länge des kegeligen Spitzenabschnitts (18) erstreckt, insbesondere über weniger als 1/3 der Länge des kegeligen Spitzenabschnitts (18).

3. Holz- oder Kunststoffschraube (10), mit einem Kopf (12), einer Spitze (14), einem zylindrischen Schaftabschnitt (16), einem kegeligen Spitzenabschnitt (18), der den Übergang vom Schaftabschnitt (16) zu der Spitze (14) bildet, und mit einem Hauptgewinde (24), das sich über den Schaftabschnitt (16) bis zur Spitze (14) erstreckt, sowie mit einem Zusatzgewinde (26), das sich abschnittsweise im Bereich des kegeligen Spitzenabschnitts (18) von einem Gewindegang (28) des Hauptgewindes (24) zum nächsten Gewindegang (30) erstreckt und an entgegengesetzten Enden in das Hauptgewinde (24) übergeht, ohne sich mit einem Gewindegang (28, 30) zu überkreuzen, **dadurch gekennzeichnet, dass** sich das Zusatzgewinde (26) in Längsrichtung der Schraube (10) über maximal 1/3 der Länge des kegeligen Spitzenabschnitts (18) erstreckt.

4. Holz- oder Kunststoffschraube (10) nach einem der vorhergehenden Ansprüche, **dadurch gekennzeichnet, dass** das Zusatzgewinde (26) eine zum Hauptgewinde (24) entgegengesetzte Steigung hat, wobei die Steigung des Zusatzgewindes (26) größer ist als die Steigung des Hauptgewindes (24).

5. Holz- oder Kunststoffschraube (10) nach einem der vorhergehenden Ansprüche, **dadurch gekennzeichnet, dass** sich das Zusatzgewinde (26) ausschließlich im Bereich des kegeligen Spitzenabschnitts (18) erstreckt.

6. Holz- oder Kunststoffschraube (10) nach einem der vorhergehenden Ansprüche, **dadurch gekennzeichnet, dass** sich das Zusatzgewinde (26) ausgehend vom Schaftabschnitt (16) in den kegeligen Spitzenabschnitt hinein erstreckt.

7. Holz- oder Kunststoffschraube (10) nach einem der Ansprüche 1 bis 5, **dadurch gekennzeichnet, dass** das Zusatzgewinde (26) in axialer Richtung vom Kopf (12) ausgehend betrachtet mit einem Abstand zum Schaftabschnitt (16) beginnt.

8. Holz- oder Kunststoffschraube (10) nach einem der vorhergehenden Ansprüche, **dadurch gekennzeichnet, dass** sich das Zusatzgewinde (26) umfangsmäßig über maximal 179°, vorzugsweise über maximal 165° des Umfangs der Schraube (10) erstreckt.

9. Holz- oder Kunststoffschraube (10) nach einem der vorhergehenden Ansprüche, **dadurch gekennzeichnet, dass** die Steigung des Zusatzgewindes (26) mehr als 20°, insbesondere mehr als 25°, vorzugsweise 26° beträgt.

10. Holz- oder Kunststoffschraube (10) nach einem der vorhergehenden Ansprüche, **dadurch gekennzeichnet, dass** das Hauptgewinde (24) eingängig ist.

## Claims

1. A wood or plastic screw (10), comprising a head (12), a tip (14), a cylindrical shank portion (16), a conical tip portion (18) that forms the transition from the shank portion (16) to the tip (14), and comprising a main thread (24) which extends over the shank portion (16) up to the tip (14), and an additional thread (26) which extends in sections in the area of the conical tip portion (18) from a thread turn (28) of the main thread (24) to the next thread turn (30) and merges into the main thread (24) at opposite ends without intersecting a thread turn (28, 30), **characterized in that** the additional thread (26) extends between the second and third threads turns when viewed from the tip (14).

2. The wood or plastic screw (10) according to claim 1, **characterized in that** the additional thread (26) extends in the longitudinal direction of the screw (10) over a maximum of 1/3 of the length of the conical tip portion (18), in particular over less than 1/3 of the length of the conical tip portion (18).

3. A wood or plastic screw (10), comprising a head (12), a tip (14), a cylindrical shank portion (16), a conical tip portion (18) that forms the transition from the shank portion (16) to the tip (14), and comprising a main thread (24) which extends over the shank portion (16) up to the tip (14), and an additional thread (26) which extends in sections in the area of the conical tip portion (18) from a thread turn (28) of the main thread (24) to the next thread turn (30) and merges into the main thread (24) at opposite ends without intersecting a thread turn (28, 30), **characterized in that** the additional thread (26) extends in the longitudinal direction of the screw (10) over a maximum of 1/3 of the length of the conical tip portion (18).

4. The wood or plastic screw (10) according to any of the preceding claims, **characterized in that** the additional thread (26) has a pitch that is opposite to that of the main thread (24), the pitch of the additional thread (26) being greater than the pitch of the main thread (24).

5. The wood or plastic screw (10) according to any of the preceding claims, **characterized in that** the additional thread (26) extends exclusively in the area of the conical tip section (18).

6. The wood or plastic screw (10) according to any of the preceding claims, **characterized in that**, starting from the shank portion (16), the additional thread (26) extends into the conical tip portion.

7. The wood or plastic screw (10) according to any of claims 1 to 5, **characterized in that** the additional thread (26) begins at a distance from the shank portion (16) when viewed in the axial direction starting from the head (12).

8. The wood or plastic screw (10) according to any of the preceding claims, **characterized in that** the additional thread (26) extends circumferentially over a maximum of 179 degrees, preferably over a maximum of 165 degrees, of the circumference of the screw (10).

9. The wood or plastic screw (10) according to any of the preceding claims, **characterized in that** the pitch of the additional thread (26) is more than 20 degrees, in particular more than 25 degrees, preferably 26 degrees.

10. The wood or plastic screw (10) according to any of the preceding claims, **characterized in that** the main thread (24) is single-start.

## Revendications

1. Vis à bois ou à matière plastique (10), comprenant une tête (12), une pointe (14), un tronçon de tige cylindrique (16), un tronçon de pointe conique (18) qui forme la transition entre le tronçon de tige (16) et la pointe (14), et comprenant un filet principal (24) qui s'étend sur le tronçon de tige (16) jusqu'à la pointe (14), ainsi qu'un filet supplémentaire (26) qui s'étend par tronçons dans la zone du tronçon de pointe conique (18) d'un pas de vis (28) du filet principal (24) au prochain pas de vis (30) et se fond dans le filet principal (24) à des extrémités opposées sans croiser un pas de vis (28, 30), **caractérisée en ce que** le filet supplémentaire (26), vu depuis la pointe (14), s'étend entre le deuxième et le troisième pas de vis.

2. Vis à bois ou à matière plastique (10) selon la revendication 1, **caractérisée en ce que** le filet supplémentaire (26) s'étend dans le sens longitudinal de la vis (10) au maximum sur 1/3 de la longueur du tronçon de pointe conique (18), en particulier sur moins de 1/3 de la longueur du tronçon de pointe conique (18).

3. Vis à bois ou à matière plastique (10), comprenant une tête (12), une pointe (14), un tronçon de tige cylindrique (16), un tronçon de pointe conique (18) qui forme la transition entre le tronçon de tige (16) et la pointe (14), et comprenant un filet principal (24) qui s'étend sur le tronçon de tige (16) jusqu'à la pointe (14), ainsi qu'un filet supplémentaire (26) qui s'étend par tronçons dans la zone du tronçon de pointe conique (18) d'un pas de vis (28) du filet principal (24) au prochain pas de vis (30) et se fond dans le filet principal (24) à des extrémités opposées sans croiser un pas de vis (28, 30), **caractérisée en ce que** le filet supplémentaire (26) s'étend dans le sens longitudinal de la vis (10) au maximum sur 1/3 de la longueur du tronçon de pointe conique (18).

4. Vis à bois ou à matière plastique (10) selon l'une des revendications précédentes, **caractérisée en ce que** le filet supplémentaire (26) présente un pas opposé au filet principal (24), le pas du filet supplémentaire (26) étant supérieur au pas du filet principal (24).

5. Vis à bois ou à matière plastique (10) selon l'une des revendications précédentes, **caractérisée en ce que** le filet principal (26) s'étend exclusivement dans la zone du tronçon de pointe conique (18).

6. Vis à bois ou à matière plastique (10) selon l'une des revendications précédentes, **caractérisée en ce que** le filet supplémentaire (26) s'étend depuis le tronçon de tige (16) dans le tronçon de pointe conique.

7. Vis à bois ou à matière plastique (10) selon l'une des revendications 1 à 5, **caractérisée en ce que** le filet supplémentaire (26), vu dans le sens axial depuis la tête (12), commence à distance du tronçon de tige (16).

8. Vis à bois ou à matière plastique (10) selon l'une des revendications précédentes, **caractérisée en ce que** le filet supplémentaire (26) s'étend circonférentiellement au maximum sur 179°, de préférence au maximum sur 165° de la circonférence de la vis (10).

9. Vis à bois ou à matière plastique (10) selon l'une des revendications précédentes, **caractérisée en ce que** le pas du filet supplémentaire (26) est égal à plus de 20°, notamment à plus de 25°, de préférence à plus de 26°.

10. Vis à bois ou à matière plastique (10) selon l'une des revendications précédentes, **caractérisée en ce que** le filet principal (24) est à pas simple.
